# NEUE EUROPÄISCHE PATENTSCHRIFT

(11) **EP 1 446 590 B2**
(45) Veröffentlichungstag und Bekanntmachung des Hinweises auf die Entscheidung über den Einspruch: **16.01.2013**
(45) Hinweis auf die Patenterteilung: 03.03.2010
(21) Anmeldenummer: 02782977.9
(22) Anmeldetag: 23.10.2002
(51) Int. Cl.: F16D 25/12

(54) **ANTRIEBSSTRANG FÜR EIN KRAFTFAHRZEUG**
DRIVE TRAIN FOR A MOTOR VEHICLE
CHAINE CINEMATIQUE POUR VEHICULE

(30) Priorität: 09.11.2001 DE 10155050
(43) Veröffentlichungstag der Anmeldung: 18.08.2004
(73) Patentinhaber: Dr. Ing. h.c. F. Porsche Aktiengesellschaft, 70435 Stuttgart (DE)
(72) Erfinder: KRAXNER, Dieter, 75449 Wurmberg (DE); BUSOLD, Thomas, 36039 Fulda (DE); GROSSPIETSCH, Wolfgang, 97421 Schweinfurt (DE); STEINER, Eduard, 97228 Rottendorf (DE)
(74) Vertreter: Patentanwälte ter Smitten Eberlein Rütten Partnerschaftsgesellschaft
(86) Internationale Anmeldenummer: PCT/EP2002/011824
(87) Internationale Veröffentlichungsnummer: WO 2003/040580

(56) Entgegenhaltungen:
- EP-A- 0 421 141
- DE-A1- 3 917 243
- DE-A1- 10 020 187
- FR-A- 1 523 581
- US-A- 3 463 283
- US-A- 4 033 201
- US-A- 5 105 922
- US-A- 5 216 606

## Beschreibung

Die Erfindung betrifft einen Antriebsstrang für ein Kraftfahrzeug, umfassend eine Kupplungseinrichtung zwischen einer Antriebseinheit und einem Getriebe, wobei die Kupplungseinrichtung wenigstens eine unter Vermittlung von Druckmedium betätigbare Kupplungsanordnung aufweist, bei der das Druckmedium mit Hilfe einer Pumpenanordnung bereitgestellt wird.

Dokument EP 0421 141 A2 offenbart einen Antriebstrang gemäß den Oberbegriff von Anspruch 1.

Derartige Kupplungssysteme sind beispielsweise aus der DE 100 56 954 A1 und DE 101 02 874 A1 bekannt, auf deren Offenbarungsgehalt in der nachfolgend beschriebenen Erfindung ausdrücklich Bezug genommen ist.

Das Kupplungssystem ist insbesondere als ein Nasslauf-Doppelkupplungssystem mit zwei Lamellen-Kupplungsanordnungen ausgebildet, das unter Vermittlung von in der Kupplungseinrichtung integrierten Nehmerzylindern auf hydraulischem Wege betätigbar ist. Derartige Doppelkupplungssysteme sind beispielsweise aus der DE 100 04 179 A1 bekannt.

Nasslauf-Doppelkupplungssysteme benötigen zur Betätigung der Lamellenkupplungen einen kleinen Volumenstrom an Druckmedium bei hohem Druck und zur Kühlung der Reibbeläge bzw. Lamellen einen vergleichsweise großen Volumenstrom an Betriebsmedium bei vergleichsweise geringem Druck. Gegenüber herkömmlichen Lösungen mit einer von der Antriebseinheit mechanisch angetriebenen Pumpe, die stets einen der momentanen Drehzahl der Antriebseinheit entsprechenden Volumenstrom bzw. Abgabedruck bereitstellt, ist es aus der DE 100 56 954 A1 und DE 101 02 874 A1) bekannt, für jeden Volumenstrom eine eigens abgestimmte Pumpenanordnung zu verwenden. Bei elektromotorisch angetriebenen Pumpen hat sich jedoch gezeigt, dass bei besonders leistungs- bzw. drehmomentstarken Antriebseinheiten der Kühlölbedarf der Kupplungseinrichtung unter Umständen so groß ist, dass der Einsatz eines Elektromotors zum Antreiben einer elektromotorischen Pumpe zum Kühlen der Kupplungseinrichtung aufgrund zu großen, durch die erforderliche Pumpenleistung bedingten Bauraumbedarfs, nachteilig ist. Eine Rückkehr zu der herkömmlichen Lösung mit einer einfachen, durch die Antriebseinheit permanent angetriebenen Pumpe kommt aus energetischen Gründen aber nicht in Betracht. Es wurde erkannt, dass man auch im Falle einer durch die Antriebseinheit permanent angetriebenen Pumpe eine Steuerbarkeit bzw. Regelbarkeit des Abgabedrucks oder/und des Abgabe-Volumenstroms der Pumpe vorsehen kann, ohne dass hierzu ein übermäßiger mechanischer und ansteuerungsmäßiger Aufwand erforderlich ist.

Darüberhinaus ist es aus der DE 100 20 187 A1 bekannt, eine hydraulisch Schaltung bereit zu stellen, die ein Pumpenanordnung offenbart mit einer Verstellpumpe, die mit einem Niederdruckkreis und einem Hochdruckkreis in Wirkverbindung steht.

Dem Erfindungsvorschlag liegt zusätzlich die Überlegung zugrunde, dass es im Falle eines hydraulisch betätigbaren Getriebes zur Einsparung einer gesonderten, der Getriebebetätigung gewidmeten Pumpe vorteilhaft ist, auch das Druckmedium für die Betätigung des Getriebes durch die Pumpenanordnung bereitzustellen, die für die Betätigung der Kupplungsanordnung und für die Bereitstellung des Betriebsmediums zur Kühlung der Kupplung sorgt. Zwar wird für die hydraulische Betätigung eines Getriebes, insbesondere eines automatisierten Getriebes, in der Regel ein deutlich höheres Hydraulikdruckniveau als für die Kupplungsbetätigung benötigt. Es hat sich aber gezeigt, dass auf der Grundlage des Erfindungsvorschlags vergleichsweise preiswert für verschiedenste, insbesondere auch leistungs- bzw. drehmomentstarke Fahrzeuge drei unterschiedliche Volumenströme realisiert werden können, die etwa zum Betrieb eines nasslaufenden, hydraulisch zu betätigenden Kupplungssystems und eines hydraulisch zu betätigenden Getriebes benötigt werden, nämlich einen hohen Druck bei einem relativ niedrigen Volumenstrom zum Betätigen der Kupplungsanordnung, einen hohen Druck, ggf. einen sehr hohen Druck bei einem relativ niedrigen Volumenstrom zum Betätigen des Getriebes und einen niedrigen Druck bei einem relativ hohen Volumenstrom zum Kühlen der Kupplungsanordnung.

Wesentlich ist, dass eine der Kupplungsbetätigung zugeordnete erste Druckspeicheranordnung und eine der Getriebebetätigung zugeordnete zweite Druckspeicheranordnung in einem dem Antriebsstrang zugeordneten Hydrauliksystem vorgesehen ist. Hierzu wird weiterbildend vorgeschlagen, dass in einem ersten Zustand des Hydrauliksystems die erste Druckspeicheranordnung unter Vermittlung der Pumpenanordnung füllbar ist und in einem zweiten Zustand des Hydrauliksystems die zweite Druckspeicheranordnung unter Vermittlung der Pumpenanordnung füllbar ist und in einem weiteren Zustand des Hydrauliksystems ein maximaler Betriebsmediumstrom der Kupplungseinrichtung zuführbar ist.

Die steuerbare bzw. regelbare Pumpe kann vorteilhaft mittels einer zugeordneten Aktuatorik unter Vermittlung von Druckmedium steuerbar oder regelbar sein, wobei das Druckmedium für die Steuerung bzw. Regelung der Pumpe vorzugsweise auf Grundlage der Pumpenanordnung bzw. Pumpe selbst bereitstellbar ist.

Es kann vorteilhaft ein Regelkreis zur bedarfsabhängigen Regelung des Abgabedrucks oder/und des Abgabe-Volumenstroms der gemeinsamen Pumpenanordnung vorgesehen sein, um den durch die Pumpenanordnung bedingten Energieverbrauch zu reduzieren. Auch eine bedarfsabhängige Steuerung des Abgabedrucks oder/und des Abgabe-Volumenstroms kommt in Betracht.

Betreffend die steuerbare bzw. regelbare Pumpe kommen diverse Pumpentypen in Betracht, beispielsweise eine hinsichtlich ihrer Exzentrizität verstellbare Flügelzellenpumpe oder auch verstellbare Axial- oder Radialkolbenpumpen.

Die Erfindung wird im Folgenden anhand von in der beigefügten Zeichnung dargestellten Ausführungsbeispielen näher erläutert.
- Fig. 1: zeigt in einer schematischen, beispielhaften Darstellung eine Grundstruktur eines erfindungsgemäßen Kupplungssystems mit einer nasslaufenden Doppelkupplung, wobei von einem Kraftfahrzeug-Antriebsstrang, dem das Kupplungssystern zugehörig ist, ferner noch das Getriebe schematisch dargestellt ist.
- Fig. 2: zeigt ein konkretes Ausführungsbeispiel eines erfindungsgemäßen Kupplungssystems gemäß der in Fig. 1 gezeigten Grundstruktur.

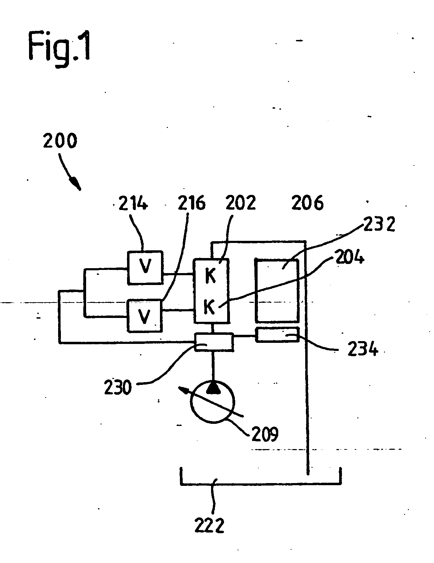

Fig. 1 zeigt schematisch ein Kupplungssystem 200, das eine nasslaufende Doppelkupplung 202 mit einer ersten, radial äußeren Kupplungsanordnung 206 und einer zweiten, radial inneren Kupplungsanordnung 204 aufweist. Bei den Kupplungsanordnungen 204 und 206 handelt es sich um nasslaufende Kupplungsanordnungen, beispielsweise um nasslaufende Lamellen-Kupplungsanordnungen, die auf an sich bekannte Weise jeweils wenigstens ein Lamellenpaket aufweisen, die beim vorliegenden Ausführungsbeispiel radial übereinander angeordnet sind und jeweils durch einen zugeordneten Betätigungskolben eines in die Doppelkupplung integrierten hydraulischen Nehmerzylinders betätigt werden. Beispiele für derartige Doppelkupplungen sind in der DE 100 04 179 A1 offenbart.

Das Kupplungssystem 200 weist eine Pumpe 209 auf, die mechanisch von der Antriebseinheit, in der Regel ein Verbrennungsmotor, des Antriebsstrangs angetrieben wird. Es handelt sich vorzugsweise um eine hydrostatische bzw. als Verdrängungsmaschine ausgeführte Pumpe. Die Pumpe 209, die unabhängig von der momentanen Drehzahl der Antriebseinheit steuerbar oder/und regelbar ist, stellt über eine Verteileranordnung 230 zum einen Druckmedium, insbesondere Drucköl, bei einem vergleichsweise hohen Druck bereit, der zur Betätigung der Kupplungsanordnungen 204 und 206 der Doppelkupplung 202 ausreicht. Zur wahlweisen Betätigung der Kupplungsanordnung sind diese, genauer deren hydraulische Nehmerzylinder, jeweils über ein zugeordnetes Ventil 214 bzw. 216 an der Verteileranordnung 230 und damit an der Pumpe 209 angeschlossen. Die Pumpe saugt Druckmedium aus einem Reservoir 222 an.

Die Pumpe stellt ferner über die Verteileranordnung 230 einen vergleichsweise großen Volumenstrom an Kühlmedium, insbesondere Kühlöl, auf einem - relativ gesehen - geringeren Druckniveau bereit, der zur Kühlung der Kupplungsanordnungen 204 und 206 dient. Ferner stellt die Pumpe 209 über die Verteileranordnung 230 Druckmedium, insbesondere Drucköl, bei einem vergleichsweise hohen, ggf. sehr hohen Druck bereit, der zur Betätigung des Getriebes 232 des Antriebsstrangs über eine zugeordnete Aktuatorik 234 ausreicht. Bei dem Getriebe handelt es sich vorzugsweise um ein unter Vermittlung einer nicht dargestellten Steuereinheit automatisiert betätigbares Doppelkupplungs- bzw. Lastschaltgetriebe. Das Getriebe weist eine der ersten Kupplungsanordnung 206 zugeordnete erste Getriebeeingangswelle und eine der zweiten Kupplungsanordnung 204 zugeordnete zweite Getriebeeingangswelle auf, die vorzugsweise koaxial zueinander verlaufen, die eine durch die andere Getriebeeingangswelle.

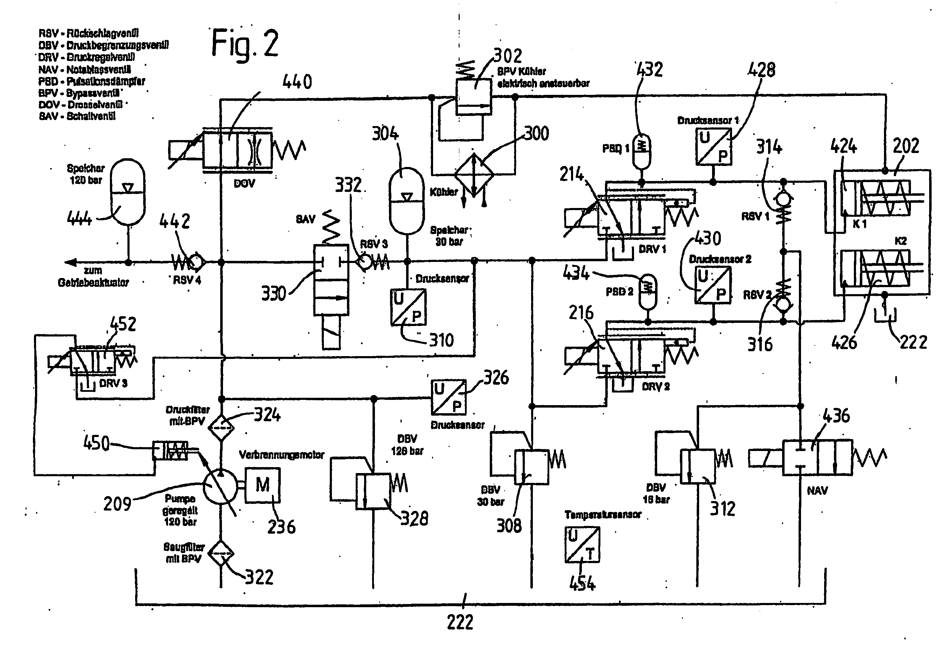

Fig. 2 zeigt ein Ausführungsbeispiel eines Kupplungssystems der in Fig. 1 gezeigten Grundstruktur in näheren Einzelheiten.

Gemäß Fig. 2 wird das Kühlöl der Doppelkupplung 202 (deren beide Kupplungsanordnungen 204 und 206 in der Darstellung der Fig. 2 durch einen jeweiligen hydraulischen Nehmerzylinder 424 bzw. 426 repräsentiert sind) über einen Wärmetauscher 300 zugeführt, da es beispielsweise im Falle eines längeren Schlupfbetriebs zu einer merklichen Temperaturerhöhung auch des Öls im Ölsumpf 222 kommen kann. Durch den Wärmetauscher 300 wird die Öltemperatur auf einem zur Kühlung der Doppelkupplung hinreichenden Temperaturniveau gehalten. Da das Kühlöl bei tieferen Temperaturen recht zähflüssig werden kann und aufgrund des Strömungswiderstands des Wärmetauschers 300 bei besonders tiefen Temperaturen unter Umständen nicht mehr genügend Kühlöl die Doppelkupplung erreichen würde bzw. ein zu hoher Öldruck zu Beschädigungen führen könnte, ist ein beispielsweise elektrisch ansteuerbares oder, alternativ, ein unter Federvorspannung stehendes Bypassventil 302 vorgesehen, das dann, wenn der Öldruck stromabwärts des Ölkühlers 300 eine vorgegebene Druckschwelle übersteigt, aufmacht bzw. in einen Öffnungszustand versetzt wird und dann das Kühlöl am Ölkühler 300 vorbei zur Doppelkupplung durchlässt.

Die vom Verbrennungsmotor 236 des Antriebsstrangs angetriebene Pumpe 209, die beispielsweise dafür ausgelegt ist, einen Abgabedruck von bis zu 120 bar bereitzustellen, saugt das Öl aus dem Reservoir 222 über einen Saugfilter 322 an, und der Pumpe ist auf der Abgabeseite noch ein so genannter Druckfilter 324 nachgeschaltet, der ggf. mit einem Bypassventil versehen ist. Ein Drucksensor 326 dient zur Überwachung des Abgabedrucks, und es ist sicherheitshalber ein Druckbegrenzungsventil 328 vorgesehen, das im Falle eines Druckanstiegs über beispielsweise 120 bar aufmacht und Drucköl zum Reservoir 222 ablässt.

Ein Kupplungsbetätigungs-Druckölkreis ist über ein Schaltventil 330 an der Abgabeseite der Pumpe 209 angeschlossen. Dem Schaltventil 330 ist ein Rückschlagventil 332 nachgeschaltet. Im Kupplungsbetätigungs-Druckölkreis ist ein ein unter Druck stehendes Gaspolster aufweisender Druckölspeicher 304 eingebaut, der beispielsweise für einen maximalen Speicherdruck von 30 bar ausgelegt ist. Der Druckölspeicher 304 sorgt für ein gleichmäßiges Druckniveau und dient dazu, Zeiten, in denen die Verbindung zwischen dem Kupplungsbetätigungs-Druckölkreislauf und der Pumpe 209 über das Schaltventil 330 unterbrochen ist, zu überbrücken.

Die Betätigungs-Nehmerzylinder der beiden Kupplungseinrichtungen 204 und 206 sind über ein jeweiliges Steuer/Regel-Ventil 214 bzw. 216 am Druckspeicher 304 angeschlossen. Der Druckölkreis zwischen dem Rückschlagventil 332 und den Ventilen 214 und 216 ist durch ein Druckbegrenzungsventil 308 gegen einen übermäßig hohen, ggf. zu Beschädigungen führenden Druck des Drucköls gesichert. Das Druckbegrenzungsventil 308 macht beispielsweise bei einem Druck von 30 bar auf. Der durch den Füllzustand des Speichers 304 bestimmte Druck in diesem Druckölkreislauf wird durch einen Drucksensor 310 erfasst.

Ein weiteres Druckbegrenzungsventil 312 sorgt dafür, dass der jenseits den Ventilen 214 und 216 herrschende, auf die hydraulischen Nehmerzylinder der Kupplungseinrichtungen wirkende Druck einen Maximalwert nicht übersteigt, beispielsweise um ebenfalls Beschädigungen vorzubeugen. Über zwei Rückschlagventile 314 und 316 wird erreicht, dass ein Druckbegrenzungsventil ausreicht, um den Betätigungsdruck von beiden hydraulischen Nehmerzylindern zu überwachen und die Nehmerzylinder gegen Überdrücke zu sichern.

Die vorzugsweise als Druck-Steuer/Regel-Ventile ausgeführten Ventile 214 und 216 regeln bzw. steuern den Druck in den den beiden Kupplungsanordnungen der Doppelkupplung 202 zugeordneten Nehmerzylindern 424 und 426. Vorliegend wird von einer Regelung des Betätigungsdrucks dieser Nehmerzylinder ausgegangen. Hierzu ist auf der Abgabeseite der Ventile 214 und 216 ein jeweiliger Drucksensor 428 bzw. 430 vorgesehen. Pulsationsdämpfer 432 und 434 fangen Druckspitzen ab und erlauben so eine zuverlässige Einregelung des Soll-Drucks.

Geht man davon aus, dass die Kupplungsanordnungen vom NORMALER-WEISE-OFFEN-Typ sind, so kann vorteilhaft ein im ausgelösten Zustand Drucköl zum Reservoir 222 ablassendes Notablassventil 436 vorgesehen werden, das durch Ablassen von Drucköl eine Notöffnung bzw. Schnellöffnung derjeweiligen, in Einrückrichtung beaufschlagten Kupplungsanordnung ermöglicht.

Der Kühlölkreislauf zur Versorgung der Kupplungsanordnungen mit Kühlöl ist über ein elektrisch schaltbares Drosselventil 440 an der Abgabeseite der Pumpe 209 angeschlossen. In einem ersten Schaltzustand wird der Kühlölstrom im Wesentlichen ungedrosselt durch das Drosselventil 440 über den Kühler 300 bzw. den Bypass 302 zur Kupplungseinrichtung 202 durchgelassen. In einem zweiten Schaltzustand des Drosselventils 440 ist eine Drosselstelle des Drosselventils wirksam, die nur noch einen vergleichsweise geringen Mindestkühlölstrom zur Kupplungseinrichtung durchlässt und einen Druckanstieg des Öldrucks im Bereich zwischen der Pumpe 209, dem Drosselventil 440 und dem Schaltventil 330 ermöglicht, so dass im geöffneten Zustand des Schaltventils 330 über das Rückschlagventil 332 der Druckspeicher 304 aufgefüllt werden kann. Ist der Solldruck (maximaler Füllzustand des Druckspeichers 304) erreicht (dies kann vermittels des Drucksensors 310 durch eine zugeordnete elektronische Steuereinheit erfasst werden), so wird das Schaltventil 330 wieder geschlossen und ggf. das Drosselventil 440 von der Drosselstellung wieder in die im Wesentlichen ungedrosselte Durchlassstellung verstellt.

Gemäß Fig. 2 ist über ein Rückschlagventil 442 ein weiterer Druckspeicher 444 an der Pumpe 209 angeschlossen. Dieser Druckspeicher 444, der für einen höheren Druck als der Speicher 304 ausgelegt ist, beispielsweise für einen maximalen Druck von 120 bar, dient zur Versorgung einer dem Getriebe des Antriebsstrangs zugeordneten Getriebeaktuatorik mit Druckmedium. Auf die Ausführungen zu Fig. 1 wird verwiesen. Dieser Druckspeicher 444 kann in entsprechender Weise wie der Druckspeicher 304 in Phasen geringeren Kühlbedarfs befüllt werden. Hierzu wird das Drosselventil 440 in die Drosselstellung gebracht und das Schaltventil 330 in der geschlossenen Stellung belassen. Wird dann die Pumpe mit voller Leistung betrieben, so kommt es zu einem Druckanstieg zwischen dem Drosselventil 440, dem Schaltventil 330 und der Getriebeaktuatorik auf zur Befüllung des Speichers 444 hinreichende Druckwerte. Eine gleichzeitige Befüllung sowohl des Speichers 304 als auch des Speichers 444 wird in der Regel nicht möglich sein, da der maximale Speicherdruck des Speichers 304 keine hinreichende Befüllung des für höhere Drücke ausgelegten Speichers 444 ermöglichen wird.

Wie schon angesprochen, ist die Pumpe hinsichtlich des Abgabe-Volumenstroms oder/und des Abgabedrucks verstellbar (steuerbar oder/und regelbar). Es ist bevorzugt, die Pumpe in eine Steuerkette oder - vorzugsweise -in einen Regelkreis einzubeziehen, um den Abgabe-Volumenstrom bzw. den Abgabedruck bedarfsabhängig zu steuern bzw. zu regeln. Die Verstellung der Pumpe kann im Prinzip auf beliebige Weise, beispielsweise elektromechanisch (elektromotorisch) erfolgen. Bevorzugt ist allerdings eine Verstellung der Pumpe unter Vermittlung von Druckmedium. Dies ist beim Ausführungsbeispiel der Fig. 2 vorgesehen. Ein hydraulischer Nehmerzylinder 450 ist über ein Steuer/Regel-Ventil 452 am Druckspeicher 304 angeschlossen. Durch entsprechende Ansteuerung des Ventils 452 durch eine zugeordnete Steuereinheit kann die Pumpe bedarfsabhängig verstellt werden, beispielsweise auf Grundlage von Kennfeldern. Man könnte auch eine bedarfsabhängige Regelung auf Grundlage des durch den Drucksensor 326 erfassten Abgabedrucks in Bezug zu einem ggf. betriebszustandsabhängig vorgebbaren Soll-Druckwert vorsehen.

Vorzugsweise wird eine einzige Steuereinheit dafür eingesetzt, die verschiedenen Ventile zu betätigen bzw. anzusteuern. Die Steuereinheit kann Messsignale von den verschiedenen Sensoren, beispielsweise auch wenigstens einem die Temperatur des Öls im Reservoir 222 erfassenden Temperatursensor 454, erhalten.

Ein wesentlicher Aspekt des Ausführungsbeispiels gemäß Fig. 2 ist, dass nur eine verbrennungsmotorisch angetriebene Pumpe, nämlich die Pumpe 209, vorgesehen ist, die für die auftretenden Volumenstrom- und Druckanforderungen ausgelegt ist. Der im Kupplungsbetätigungskreislauf vorgesehene Speicher 304 und der im Getriebebetätigungskreislauf vorgesehene Speicher 444 dienen dazu, dass die Pumpe nicht ständig das große-Fördervolumen bei hohem Druck bereitstellen muss, da die Speicher in Zeiten, wo kein oder nur geringe Mengen an Kühlöl benötigt werden, aufgeladen werden können. Hierzu werden, wie erläutert, die Ventile 440 und 330 so geschaltet, dass sich das von der Pumpe 209 geförderte Öl gewissermaßen "aufstaut", also der Druck so ansteigt, dass der Speicher 304 bzw. der Speicher 444 gefüllt werden kann.

## Patentansprüche

1. Antriebsstrang für ein Kraftfahrzeug mit einer zwischen einer Antriebseinheit und einem Getriebe (232) angeordneten Kupplungseinrichtung (202) zur Momentenübertragung zwischen der Antriebseinheit und dem Getriebe, wobei die Kupplungseinrichtung wenigstens eine unter Vermittlung von Druckmedium betätigbare, für einen Betrieb unter Einwirkung eines Betriebsmediums vorgesehene Kupplungsanordnung (204, 206) aufweist und das Getriebe mittels einer zugeordneten Aktuatorik (234) unter Vermittlung von Druckmedium betätigbar ist, wobei auf Grundlage einer durch die Antriebseinheit angetriebenen oder antreibbaren gemeinsamen Pumpenanordnung (209) i) das Druckmedium für die Betätigung der Kupplunganördnung bereitstellbar ist und ii) der Kupplungseinrichtung für den Betrieb unter Einwirkung des Betriebsmediums Betriebsmedium zuführbar ist und iii) das Druckmedium für die Betätigung des Getriebes bereitstellbar ist und dass die Pumpenanordnung wenigstens eine hinsichtlich des Abgabedrucks oder/und hinsichtlich des Abgabe-Volumenstroms steuerbare oder regelbare Pumpe (209) umfasst,
wobei die Kupplungsanordnung (204, 206) eine nasslaufende Kupplungsanordnung ist, und dass der Betrieb unter Einwirkung des Betriebsmediums ein nasslaufender Betrieb ist und dass das Betriebsmedium eine Betriebsflüssigkeit, ggf. ein Kühlflüssigkeit, ist,
**dadurch gekennzeichnet, dass**
eine der Kupplungsbetätigung zugeordnete erste Druckspeicheranordnung eine der (304) und eine der Getriebebetätigung zugeordnete zweite Druckspeicheranordnung (444) in einem Hydrauliksystem vorgesehen sind.

2. Antriebsstrang nach Anspruch 1, **dadurch gekennzeichnet, dass** die Pumpe (209) mittels einer zugeordneten Aktuatorik (452, 450) unter Vermittlung von Druckmedium steuerbar oder regelbar ist, wobei das Druckmedium für die Steuerung bzw. Regelung der Pumpe vorzugsweise auf Grundlage der Pumpenanordnung (209) bereitstellbar ist.

3. Antriebsstrang nach Anspruche 1 oder 2, **gekennzeichnet durch** einen Regelkreis zur bedarfsabhängigen Regelung des Abgabedrucks oder/und des Abgabe-Volumenstroms der Pumpenanordnung (209).

4. Antriebsstrang nach einem der vorhergehenden Ansprüche, **dadurch gekennzeichnet, dass** die Kupplungseinrichtung als Mehrfach-Kupplungseinrichtung, insbesondere Doppel-Kupplungseinrichtung (202), ausgeführt ist und eine erste Kupplungsanordnung (206), der wenigstens ein erster Nehmerzylinder (424) zugeordnet ist, und eine zweite Kupplungsanordnung (204), der wenigstens ein zweiter Nehmerzylinder (226) zugeordnet ist, aufweist, wobei den beiden Nehmerzylindern unabhängig voneinander von der Pumpenanordnung (209) bereitgestelltes Medium als Druckmedium zuführbar ist.

## Claims

1. Drive train for a motor vehicle, having a clutch device (202), which is arranged between a drive unit and a gearbox (232), for transmitting torque between the drive unit and the gearbox, the clutch device having at least one clutch arrangement (204, 206) which can be actuated with the aid of pressure medium and which is provided for operation under the action of an operating medium, and it being possible for the gearbox to be actuated by means of an associated actuating arrangement (234) with the aid of pressure medium, wherein, by means of a common pump arrangement (209) which is or can be driven by the drive unit, i) the pressure medium for the actuation of the clutch arrangement can be provided and ii) operating medium can be supplied to the clutch device for operation under the action of the operating medium and iii) the pressure medium for the actuation of the gearbox can be provided and that the pump arrangement comprises at least one pump (209) which can be controlled or regulated with regard to the output pressure and/or with regard to the output volume flow, whereby the clutch arrangement (204, 206) is a wet-running clutch arrangement, in that the operation under the action of the operating medium is wet-running operation, and in that the operating medium is an operating fluid, if appropriate a cooling fluid **characterized by** a first pressure accumulator arrangement (304), which is assigned to the clutch actuation, and a second pressure accumulator arrangement (444), which is assigned to the gearbox actuation, in a hydraulic system.

2. Drive train according to Claim 1, **characterized in that** the pump (209) can be controlled or regulated by means of an associated actuating arrangement (452, 450) with the aid of pressure medium, it being possible for the pressure medium for the control or regulation of the pump to be provided preferably by means of the pump arrangement (209).

3. Drive train according to Claim 1 or 2, **characterized by** a regulating circuit for the demand-dependent regulation of the output pressure and/or output volume flow of the pump arrangement (209).

4. Drive train according to one of the preceding claims, **characterized in that** the clutch device is designed as a multiple clutch device, in particular double clutch device (202), and has a first clutch arrangement (206), which is assigned at least one first slave cylinder (424), and a second clutch arrangement (204), which is assigned at least one second slave cylinder (226), it being possible for medium provided by the pump arrangement (209) to be supplied as pressure medium to the two slave cylinders independently of one another.

## Revendications

1. Chaîne cinématique pour un véhicule automobile, comprenant un système d'embrayage (202) disposé entre une unité d'entraînement et une boîte de vitesses (232), pour le transfert de couple entre l'unité d'entraînement et la boîte de vitesses, le système d'embrayage présentant au moins un agencement d'embrayage (204, 206) pouvant être actionné par l'intermédiaire d'un fluide de pression, prévu pour un fonctionnement sous l'effet d'un fluide de travail, et la boîte de vitesses pouvant être actionnée au moyen d'un système d'actionneurs associé (234) par l'intermédiaire d'un fluide de pression, i) le fluide de pression pouvant être fourni pour l'actionnement de l'agencement d'embrayage par le biais d'un agencement de pompe (209) commun entraîné ou pouvant être entraîné par l'unité d'entraînement, et ii) le système d'embrayage pouvant être alimenté en fluide de travail pour le fonctionnement sous l'effet du fluide de travail, et iii) le fluide de pression pouvant être fourni pour l'actionnement de la boîte de vitesses et que l'agencement de pompe comprend au moins une pompe (209) commandable ou réglable en terme de pression fournie et/ou en terme de débit volumique fourni, l'agencement d'embrayage (204, 206) est un agencement d'embrayage humide, en ce que le fonctionnement sous l'effet du fluide de travail est un fonctionnement humide et en ce que le fluide de travail est un liquide de travail, éventuellement un liquide de refroidissement **caracterisée par** un premier agencement d'accumulateur de pression (304) associé à l'actionnement de l'embrayage, et par un deuxième agencement d'accumulateur de pression (444) associé à l'actionnement de la boîte de vitesses dans un système hydraulique.

2. Chaîne cinématique selon la revendication 1, **caractérisée en ce que** la pompe (209) peut être commandée ou réglée au moyen d'un système d'actionneurs associé (452, 450), par l'intermédiaire de fluide de pression, le fluide de pression pouvant être fourni pour la commande ou le réglage de la pompe de préférence par le biais de l'agencement de pompe (209).

3. Chaîne cinématique selon la revendication 1 ou 2, **caractérisée par** un circuit de réglage pour le réglage de la pression fournie et/ou du débit volumique fourni par l'agencement de pompe (209) en fonction des besoins.

4. Chaîne cinématique selon l'une quelconque des revendications précédentes, **caractérisée en ce que** le système d'embrayage est réalisé sous forme de système d'embrayage multiple, notamment sous forme de système à double embrayage (202), et présente un premier agencement d'embrayage (206), qui est associé à au moins un premier cylindre récepteur (424), et un deuxième agencement d'embrayage (204) qui est associé à au moins un deuxième cylindre récepteur (226), les deux cylindres récepteurs pouvant être alimentés indépendamment l'un de l'autre en fluide fourni par l'agencement de pompe (209) en tant que fluide de pression.
